# EUROPÄISCHE PATENTSCHRIFT

(11) **EP 1 767 085 B1**
(45) Veröffentlichungstag und Bekanntmachung des Hinweises auf die Patenterteilung: **13.08.2008**
(21) Anmeldenummer: 06120248.7
(22) Anmeldetag: 07.09.2006
(51) Int. Cl.: A01D 43/08

(54) **Maschine zur Ernte stängelartiger Pflanzen**
Machine for harvesting stalk plants
Machine pour récolter des plantes à tiges

(30) Priorität: 22.09.2005 DE 102005045274; 17.12.2005 DE 102005060453
(43) Veröffentlichungstag der Anmeldung: 28.03.2007
(73) Patentinhaber: Maschinenfabrik Kemper GmbH & Co. KG, 48973 Stadtlohn (DE)
(72) Erfinder: Schulze Hockenbeck, Leo, 48351, Everswinkel (DE); Weitenberg, Klemens, 46325, Borken (DE); Rickert, Clemens, 48703, Stadtlohn (DE); Hüning, Martin, 48727, Billerbeck (DE)
(74) Vertreter: Holst, Sönke

(56) Entgegenhaltungen:
- EP-A1- 1 305 999
- DE-C1- 10 105 439
- DE-C2- 19 527 607

## Beschreibung

Die Erfindung betrifft eine Maschine zum Mähen von stängelartigem Erntegut, mit Mäh- und Einzugseinrichtungen zum Abschneiden und Fördern des Ernteguts, Querfördermitteln zur Querförderung des abgeschnittenen Ernteguts zumindest näherungsweise quer zur Vorwärtsrichtung in Richtung auf die Längsmittelebene der Maschine zu, und einem Umlenkkanal, der von einer sich quer zur Vorwärtsrichtung erstreckenden Richtung in einem Bogen nach hinten in Richtung auf einen Einzugskanal einer Erntemaschine umschwenkt, wobei an der Vorderseite des Umlenkkanals gegenüber dem Umlenkkanal bewegliche, von den Mäh- und Einzugseinrichtungen getrennt ausgebildete und rückwärtig der Mäh- und Einzugseinrichtungen angeordnete Zusatzfördermittel angeordnet sind, die im Betrieb um eine zumindest näherungsweise vertikale Achse rotieren.

### Stand der Technik

In der DE 102 49 457 A wird eine Maschine beschrieben, die mehrere seitlich nebeneinander angeordnete Mäh- und Einzugseinrichtungen umfasst, die sich jeweils aus einer unteren Schneidscheibe und darüber angeordneten Förderscheiben zusammensetzen, deren Umfang mit taschenförmigen Aussparungen ausgestattet ist. Das Erntegut wird an den Rückseiten der Mäh- und Einzugseinrichtungen unterstützt durch Schlitze in der Rückwand der Maschine durchdringende Querfördertrommeln in Richtung auf die Längsmittelebene der Maschine gefördert. Vor dem Einzugskanal eines die Maschine über ein Feld bewegenden Feldhäckslers sind als Umlenkfördermittel dienende Schrägfördertrommeln angeordnet, die den quer einlaufenden Erntegutstrom übernehmen und um 90° nach hinten umlenken, so dass er in den Einzugskanal der Erntemaschine gelangt. Das Umlenken des Ernteguts nach hinten durch die Umlenkfördermittel wird durch bogenförmige Umlenkkufen, die am Boden der Maschine zwischen den Umlenkfördermitteln angeordnet sind, und durch eine darüber angeordnete Abdeckung erleichtert. Die Umlenkkufen und die Abdeckung definieren somit vordere und innere Begrenzungen eines Umlenkförderkanals, durch den die Umlenkfördermittel die Pflanzen transportieren. Die vorderen Enden der Umlenkkufen wirken auch als Abstreifer auf die inneren Einzugs- und Mähtrommeln. Eine ähnliche Maschine wird in der EP 1 543 714 A beschrieben.

Die Umlenkfördermittel fördern die Pflanzen demnach entlang feststehender Oberflächen, was aufgrund der entstehenden Reibung einen gewissen Energiebedarf bedingt. Außerdem neigt die Umlenkkufe bei bestimmten Erntegutbedingungen zum Stopfen.

Eine andere Maschine zum Mähen von stängelartigem Erntegut wird in der DE 37 12 507 C beschrieben. Sie umfasst vier Mäh- und Einzugseinrichtungen in Form um die Hochachse rotierender, mit Mitnehmern ausgestatteter Trommeln und darunter angeordneter Schneidscheiben. Zwei kleinere Trommeln sind der Längsmittelebene der Maschine benachbart, während zwei größere Trommeln weiter außen angeordnet sind. Die äußeren Trommeln drehen sich nach innen und übergeben das Erntegut an gegensinnig zu ihnen rotierende Abstreifwalzen, die das Erntegut an ihren Vorderseiten nach innen fördern und wiederum an die Rückseiten der inneren Trommeln übergeben. Letztere geben das Erntegut wiederum in den Einzugskanal des die Maschine tragenden Feldhäckslers ab.

Als nachteilig ist hierbei anzusehen, dass die inneren Trommeln sämtliches auf ihrer Seite der Längsmittelebene der Maschine einlaufendes Erntegut transportieren müssen, so dass ihre Mitnehmer mit derart großen Zwischenräumen zu dimensionieren sind, dass sie die erforderliche, relativ hohe Anzahl an Pflanzen aufnehmen können. Das führt jedoch dazu, dass die an den Vorderseiten der inneren Trommeln abzumähenden Pflanzen aufgrund der großen Zwischenräume zwischen den Mitnehmern nicht sicher erfasst werden können. Diese Pflanzen fallen zumindest zum Teil auf den Boden und gehen dem Erntevorgang verloren.

Die DE 195 27 607 C beschreibt eine Maschine eingangs genannter Art. Innerhalb des Hüllkreises von koaxial über zugehörigen Mähscheiben angeordneten Förderscheiben sind Ausräumerscheiben um vertikal verlaufende Achsen drehbar und in Drehrichtung der Förderscheiben antreibbar angeordnet. Es sind insgesamt vier Mäh- und Einzugseinrichtungen seitlich nebeneinander angeordnet. Rückwärtig der Ausräumerscheiben der inneren Mäh- und Einzugseinrichtungen sind die Vorpresswalzen des Feldhäckslers angeordnet. Die DE 101 05 439 C beschreibt eine ähnliche Maschine, bei der jedoch zusätzliche Umschlingungstriebe zwischen den Rückseiten der Mäh- und Einzugseinrichtungen und den Ausräumerscheiben angeordnet sind.

Bei den Maschinen nach DE 195 27 607 C und DE 101 05 439 C befinden sich die Ausräumerscheiben innerhalb der Hüllkreise der Förderscheiben der ihnen zugeordneten, vorgelagerten Mäh- und Einzugseinrichtungen. Die Ausräumerscheiben fördern das Erntegut demnach in Richtung auf die Maschinenmitte. Wegen fehlender Umlenkung und aktiver Förderung der Pflanzen nach hinten erweist sich die Übergabe an die Einzugswalzen als problematisch.

### Aufgabe der Erfindung

Die der Erfindung zu Grunde liegende Aufgabe wird darin gesehen, eine Maschine zur Ernte stängelartiger Pflanzen bereitzustellen, die ohne Einbezug der vor den Umlenkfördermitteln angeordneten Mäh- und Einzugseinrichtung eine energiesparende und nicht zum Verstopfen neigende Umlenkung der Pflanzen in den Einzugskanal ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Maschine zum Mähen von stängelartigem Erntegut umfasst mehrere seitlich nebeneinander angeordnete Mäh- und Einzugseinrichtungen zum Abschneiden und Fördern des Ernteguts. Querfördermittel transportieren das Erntegut in Richtung auf die Längsmittelebene auf die Maschine zu, in deren Nähe es in einen bogenförmig nach hinten umschwenkenden Umlenkkanal gelangt, durch den es schließlich den Einzugskanal einer die Maschine tragenden und im Erntebetrieb in einer Vorwärtsrichtung über ein Feld bewegenden Erntemaschine erreicht, insbesondere eines selbst fahrenden, gezogenen oder an einen Traktor angebauten Feldhäckslers. Angetriebene oder frei mitlaufende Zusatzfördermittel sind auf der in Vorwärtsrichtung vorderen Seite des Umlenkkanals angebracht, welche von der vor ihnen angeordneten Mäh- und Einzugseinrichtung getrennt ausgebildet und rückwärtig davon angeordnet sind. Die Zusatzfördermittel umfassen einen um eine zumindest etwa vertikale Achse rotierender Förderer, z. B. ein Trommelförderer mit feststehenden Mitnehmern oder Zähnen. Denkbar wäre es auch, einen Trommelförderer mit sich beim Umlauf radial (wie die Mitnehmerfinger in der Querförderschnecke eines Schneidwerks) und/oder rotierend (wie bei Haspeln von Schneidwerken) bewegenden Mitnehmern zu verwenden, um die Annahme und Abgabe des Ernteguts zu verbessern. Die Zusatzfördermittel können auch mehrere in Flussrichtung des Ernteguts hintereinander angeordnete Förderer umfassen. Die Zusatzfördermittel und die davor angeordnete Mäh- und Einzugseinrichtung weisen sich nicht überlagernde Hüllkurven auf.

Auf diese Weise erreicht man, dass die Zusatzfördermittel im Betrieb die Pflanzen reibungsarm durch den Umlenkkanal transportieren. Weiterhin reinigen die Zusatzfördermittel den Umlenkkanal von eventuell an seinen Wänden anhaftenden Pflanzenteilen, so dass die Gefahr von Verstopfungen vermindert wird. Es wäre denkbar, auf an der Rückseite des Umlenkkanals angeordnete Umlenkfördermittel zu verzichten, so dass die ganze Maschine in Fahrtrichtung kürzer gestaltet werden kann.

Bei einer vorteilhaften Ausführungsform der Erfindung wird der Umlenkkanal nach vorn durch eine bogenförmig nach hinten gekrümmte Umlenkkufe begrenzt. Die Zusatzfördermittel können Mitnehmer aufweisen, die oberhalb dieser Umlenkkufe angeordnet sind bzw. einen darin vorgesehenen Schlitz durchdringen, so dass sie in den Umlenkkanal ragen.

Bei einer möglichen Ausführungsform transportieren an der Rückseite des Umlenkkanals positionierte Umlenkfördermittel das Erntegut im Zusammenwirken mit den Zusatzfördermitteln durch den Umlenkkanal. Dann befinden sich jeweils zusammenwirkende Zusatzfördermittel und Umlenkfördermittel auf derselben Seite der Längsmittelebene der Maschine.

In einer bevorzugten Ausbildung überlagern sich die Hüllkurven der Umlenkfördermittel und der Zusatzfördermittel, was eine Ansammlung von Pflanzenmaterial an den sich überlagernden Bereichen zu vermeiden hilft.

### Ausführungsbeispiel

In den Zeichnungen sind drei nachfolgend näher beschriebene Ausführungsbeispiele der Erfindung dargestellt. Es zeigt:
- Fig. 1: eine Draufsicht auf eine erste Ausführungsform einer Maschine zum Mähen von stängelartigem Erntegut,
- Fig. 2: eine Draufsicht auf eine zweite, nicht unter den Umfang des Anspruchs 1 fallenden Ausführungsform einer Maschine zum Mähen von stängelartigem Erntegut,
- Fig. 3: einen Schnitt entlang der Linie 3-3 der Figur 2, und
- Fig. 4: eine Draufsicht auf eine dritte Ausführungsform einer Maschine zum Mähen von stängelartigem Erntegut.

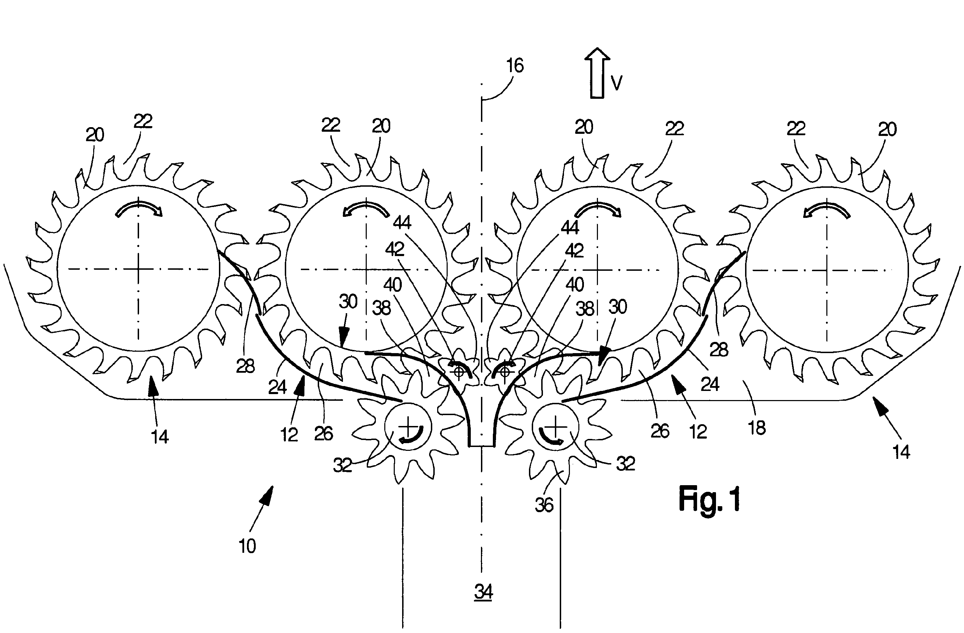

Die in Figur 1 dargestellte Maschine 10 zum Mähen von stängelartigem Erntegut weist vier Mäh- und Einzugseinrichtungen 12 und 14 auf, die symmetrisch zu einer Längsmittelebene 16 der Maschine 10 angeordnet sind und jeweils eine Arbeitsbreite von beispielsweise 1,5 m aufweisen können. Die Maschine 10 wird von einem Rahmen 18 getragen.

Die reihenunabhängig arbeitenden Mäh- und Einzugseinrichtungen 12 und 14 sind aus einer unteren Schneidscheibe (nicht gezeigt), die um eine etwa vertikal verlaufende Achse rotiert, und koaxial darüber angeordneten Förderscheiben 20 zusammengesetzt, deren Umfang mit taschenförmigen Aussparungen 22 ausgestattet ist. Die Schneidscheiben trennen die oberen Teile des Ernteguts von den im Boden verbleibenden Stoppeln ab. Die Stängel des Ernteguts, bei dem es sich insbesondere um Mais handelt, werden in den Aussparungen 22 der Förderscheiben 20 aufgenommen und festgehalten.

Zwischen der Rückseite der Mäh- und Einzugseinrichtungen 12 und 14 und einer in ihrer Form an die Mäh- und Einzugseinrichtungen 12 und 14 angepassten Rückwand 24 der Maschine 10 ist ein Querförderkanal 26 gebildet, durch den das von den Mäh- und Einzugseinrichtungen 12 und 14 abgeerntete Gut seitlich zur Mitte der Maschine 10 transportiert wird.

Die beiden äußeren Mäh- und Einzugseinrichtungen 14 werden derart in Drehung versetzt, dass das geerntete Gut zunächst seitlich in Richtung auf die Längsmittelebene 16 zu und dann entgegen der Fahrtrichtung V der Maschine 10 nach hinten gefördert wird. Dort wird das Erntegut von der nächst inneren Mäh- und Einzugseinrichtung 12 übernommen. Diese Mäh- und Einzugseinrichtung 12 dreht sich gegensinnig zu der äußeren Mäh-und Einzugseinrichtung 14, so dass sie das geerntete Gut zunächst seitlich nach außen und anschließend nach hinten fördert. An ihrer der äußeren Mäh- und Einzugseinrichtung 14 zugewandten Seite übernimmt die innere Mäh- und Einzugseinrichtung 12 das Erntegut von der äußeren Mäh- und Einzugseinrichtung 14. Ein Ausräumer 28, der aus in den Hüllkreis der äußeren Mäh- und Einzugseinrichtung 14 eingreifenden Blechen aufgebaut ist und das Erntegut aus den taschenförmigen Aussparungen 22 der Förderscheibe 20 der äußeren Mäh- und Einzugseinrichtung 14 hebt, bewirkt den Übergang des Ernteguts auf die Mäh- und Einzugseinrichtung 12, an deren Rückseite das Erntegut im Zusammenwirken mit der Rückwand 24 nach innen in Richtung auf die Längsmittelebene 16 zu gefördert wird. Die Rückseiten der inneren Mäh- und Einzugseinrichtungen 12 dienen demnach als Querfördermittel 30 zur Querförderung des abgeschnittenen Ernteguts und fördern es zumindest näherungsweise quer zur Vorwärtsrichtung V in Richtung auf die Längsmittelebene 16 der Maschine 10.

In Vorwärtsrichtung V hinter den beiden inneren Mäh- und Einzugseinrichtungen 14 sind als Schrägfördertrommeln ausgeführte Umlenkfördermittel 32 mit nach vorn geneigten Drehachsen angeordnet, die das Erntegut nach hinten in einen Einzugskanal 34 eines Feldhäckslers mit darin übereinander angeordneten Einzugswalzen fördern. Die Umlenkfördermittel 32 sind aus zylindrischen Körpern mit daran übereinander angeordneten Förderscheiben aufgebaut, welche zum Guttransport mit zahnförmigen Mitnehmern 36 versehen sind.

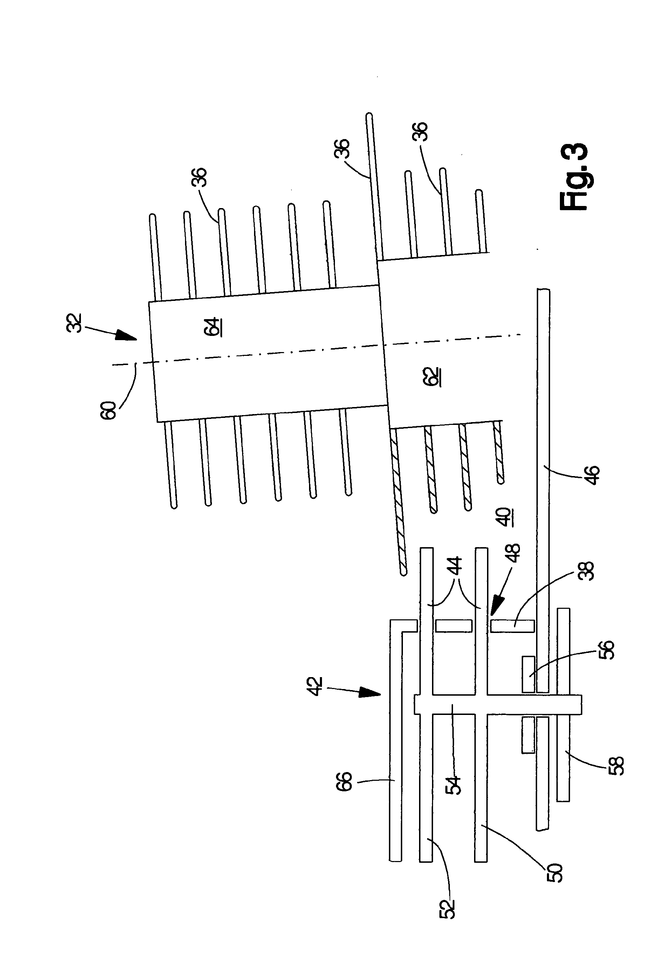

Das Umlenken des Ernteguts nach hinten durch die Umlenkfördermittel 32 wird durch bogenförmige Umlenkkufen 38, die am Boden der Maschine 10 zwischen den Umlenkfördermitteln 32 angeordnet sind, und durch eine darüber angeordnete Abdeckung 66 (s. Figur 3) erleichtert. Die vorderen Enden der Umlenkkufen 38 wirken auch als Ausräumer auf die inneren Mäh- und Einzugseinrichtungen 12. Die Umlenkkufen 38 definieren die vordere und innere Begrenzung eines bogenförmig von einer seitlichen Richtung in eine nach hinten gerichtete Richtung umschwenkenden Umlenkkanals 40, der sich an den Querförderkanal 26 anschließt und durch den das Erntegut in den Einzugskanal 34 gelangt.

Es sind zwei Zusatzfördermittel 42 in Form von Förderscheiben mit zahnförmigen Mitnehmern 44 vorgesehen, von denen jedes auf einer anderen Seite der Längsmittelebene 16 einem Umlenkkanal 40 zugeordnet ist. Die Zusatzfördermittel 42 werden jeweils um die Hochachse gegensinnig zu den Umlenkfördermitteln 32 drehend angetrieben. Sie ragen in den Umlenkkanal 40 hinein. Sie befinden sich jeweils auf der Seite des Umlenkkanals 40, die den Umlenkfördermitteln 32 gegenüberliegt. Sie sind getrennt von den davor angeordneten Mäh- und Einzugseinrichtungen 12 ausgeführt. Die Drehachsen der Umlenkfördermittel 32 und der ihnen jeweils zugeordneten Zusatzfördermittel 42 lassen sich durch gedachte Linien verbinden, die einen Winkel von etwa 45° mit der Vorwärtsrichtung V einschließen. In der in der Figur 1 gezeigten vertikalen Draufsicht überdecken sich die von den äußeren Enden der Mitnehmer 36, 42 beschriebenen Hüllkreise. Die Mitnehmer 44 tauchen jedoch nicht in den Hüllkreis der Förderscheiben 20 der davor angeordneten Mäh- und Einzugseinrichtungen 12 ein.

Der Antrieb der Mäh- und Einzugseinrichtungen 12, 14, der Zusatzfördermittel 42 und der Umlenkfördermittel 32 erfolgt mittels geeigneter Getriebe durch den Feldhäcksler. Beim Erntevorgang wird die Maschine 10 in Fahrtrichtung V über ein Feld bewegt. Das gegebenenfalls von Halmteilern (nicht dargestellt) seitlich abgelenkte stängelartige Erntegut wird von den Mäh- und Einzugseinrichtungen 12, 14 abgeschnitten und in den Querförderkanal 26 hineingefördert. Durch die Förderwirkung der Rückseiten der inneren Mäh- und Einzugseinrichtungen 12 erreicht das Erntegut die Umlenkkufen 38 und die Abdeckung, durch die es nach hinten in den Umlenkkanal 40 umgelenkt wird. Die Umlenkfördermittel 32 sowie die Zusatzfördermittel 42 führen das Erntegut dem Einzugskanal 34 des Feldhäckslers zu, wo es gehäckselt und auf einem Wagen abgelegt wird. Die Zusatzfördermittel 42 vermindern die Reibung des Ernteguts an den Unlenkkufen 38 und bewirken eine Reinigung des Umlenkkanals 40 und der Umlenkfördermittel 32 von Pflanzenteilen, was die Gefahr von Verstopfungen vermindert.

Soll die Arbeitsbreite der Maschine 10 vergrößert werden, können in an sich bekannter Weise (s. DE 102 49 457 A, deren Offenbarung durch Verweis mit in die vorliegenden Unterlagen aufgenommen wird) weitere Mäh- und Einzugseinrichtungen zwischen den vorhandenen Mäh- und Einzugseinrichtungen 12, 14 eingefügt werden. Der Transport des Ernteguts an der stromab liegenden Seite der hinzugefügten Mäh- und Einzugseinrichtung erfolgt dann vorzugsweise durch zusätzliche Querfördertrommeln, die Schlitze in der Rückwand 24 durchgreifen. Es wäre im Übrigen auch denkbar, die Drehrichtung der inneren Mäh- und Einzugseinrichtungen 12 umzudrehen, wie bei der dritten Ausführungsform der DE 102 49 457 A, so dass diese ihr Erntegut stromauf der Zusatzfördermittel 42 in den Umlenkkanal 40 abgeben, während das von den anderen Mäh-und Einzugseinrichtungen 14 einlaufende Erntegut durch separate Förderer rückwärtig der Rückseiten der inneren Mäh- und Einzugseinrichtungen 12 transportiert wird.

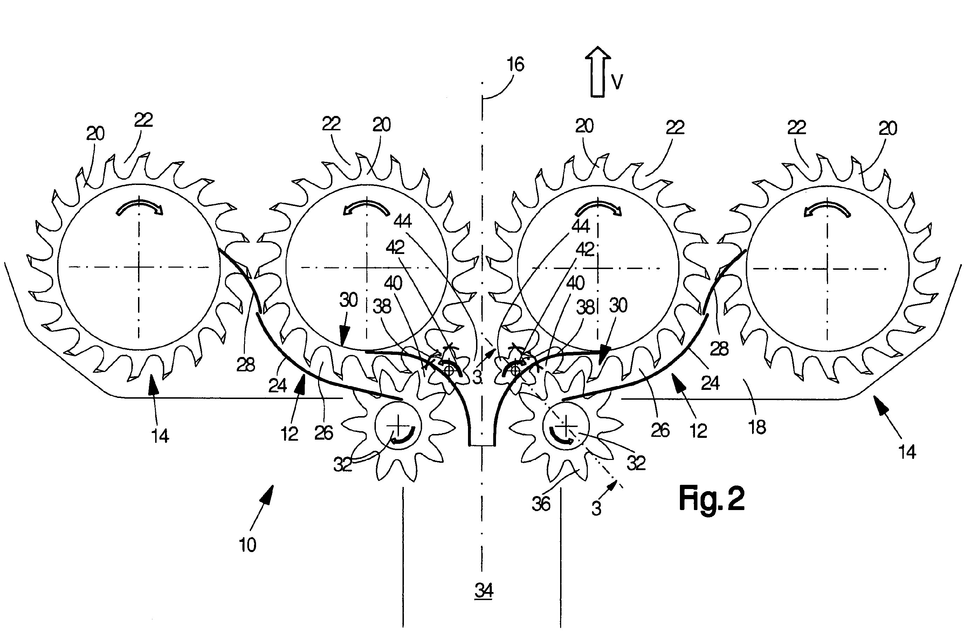

Bei der in der Figur 2 wiedergegebenen zweiten Ausführungsform sind der ersten Ausführungsform entsprechende Elemente mit denselben Bezugszeichen versehen. Im Unterschied zur Ausführungsform nach Figur 1 überdecken sich hier die von den Mitnehmern 44 der Zusatzfördermittel 42 beschriebenen Hüllkreise mit den äußeren Hüllkreisen der Förderscheiben 20 der inneren Mäh- und Einzugseinrichtungen 12.

Die Figur 3 zeigt einen Schnitt entlang der Linie 3-3 in der Figur 2. Dieser Schnitt würde bei der Ausführungsform nach Figur 1 identisch aussehen. Es ist erkennbar, dass die Umlenkkufe 38 oberhalb eines Bodens 46 des Rahmens 18 der Maschine 10 angebracht ist und einen Schlitz 48 aufweist, durch den sich die Mitnehmer 44 einer unteren Förderscheibe 50 des Zusatzfördermittels 42 erstrecken. Die Mitnehmer 44 einer oberen Förderscheibe 52 des Zusatzfördermittels 42 befinden sich oberhalb der Umlenkkufe 38. Die Zusatzfördermittel 42 umfassen eine sich vertikal erstreckende Antriebswelle 54, welche die beiden Förderscheiben 50, 52 trägt, in einer Lagerung 56 am Boden 46 abgestützt ist und durch ein Zahnrad 58 über einen nicht weiter dargestellten Antriebsstrang angetrieben wird.

Die in der Figur 3 ebenfalls dargestellten Umlenkfördermittel 32 umfassen in an sich bekannter Weise eine nach vorn geneigte Drehachse 60 und setzen sich aus einer unteren Trommel 62 und einer oberen Trommel 64 mit gegenüber der unteren Trommel 62 verringertem Durchmesser zusammen. Die oberen Mitnehmer 36 der unteren Trommel 62 der Umlenkfördermittel 32 überdecken sich mit den Mitnehmern 44 der Zusatzfördermittel 42. Anhand der Figur 3 ist auch erkennbar, dass die Zusatzfördermittel 42 wesentlich niedriger als die Umlenkfördermittel 32 sind, was sich zur Erreichung eines optimalen Gutflusses als vorteilhaft erwiesen hat.

Anders als in der Figur 3 dargestellt, könnten die Mitnehmer 36, 44 auch nicht höhenversetzt, sondern in ihrem überschneidenden Bereich in einer gemeinsamen Ebene angeordnet sein. Dann wären ihre Drehzahlen zu synchronisieren, um Kollisionen zu vermeiden.

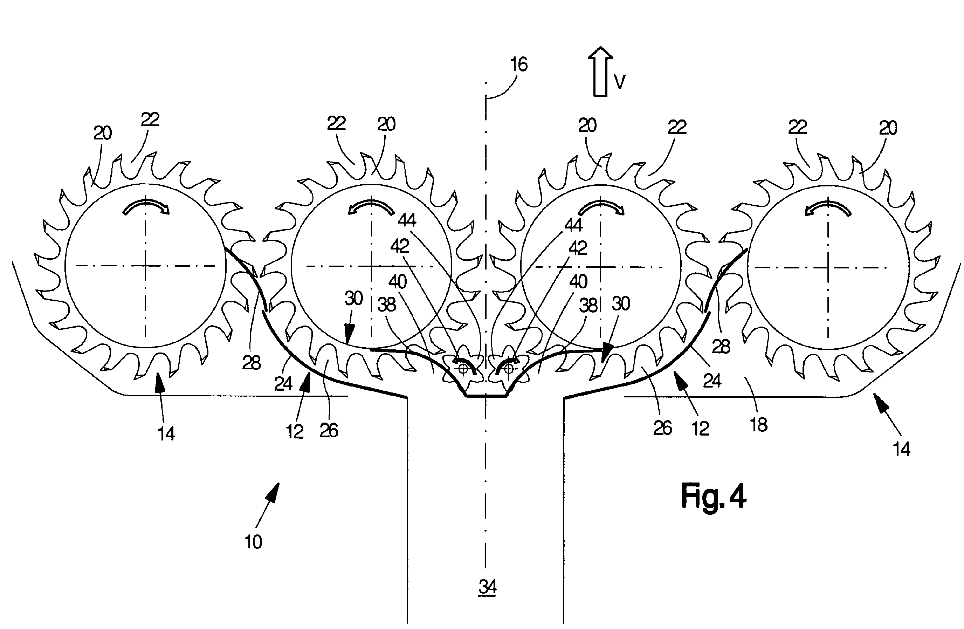

Die Figur 4 zeigt eine Draufsicht auf eine Maschine 10, die im Wesentlichen der Maschine aus Figur 1 entspricht. Im Unterschied dazu sind jedoch die Umlenkfördermittel 30 entfallen, so dass die Maschine 10 in Vorwärtsrichtung etwas kürzer ausfällt. Stromab der Zusatzfördermittel 42 folgen als nächste angetriebene Fördereinheiten die Vorpress- oder Einzugswalzen des die Maschine 10 tragenden Feldhäckslers.

## Patentansprüche

1. Maschine (10) zum Mähen von stängelartigem Erntegut, mit Mäh- und Einzugseinrichtungen (12, 14) zum Abschneiden und Fördern des Ernteguts, Querfördermitteln (30) zur Querförderung des abgeschnittenen Ernteguts zumindest näherungsweise quer zur Vorwärtsrichtung (V) in Richtung auf die Längsmittelebene (16) der Maschine (10) zu, und einem Umlenkkanal (40), der von einer sich quer zur Vorwärtsrichtung (V) erstreckenden Richtung in einem Bogen nach hinten in Richtung auf einen Einzugskanal (34) einer Erntemaschine umschwenkt, wobei an der Vorderseite des Umlenkkanals (40) gegenüber dem Umlenkkanal (40) bewegliche, von den Mäh- und Einzugseinrichtungen (12, 14) getrennt ausgebildete und rückwärtig der Mäh- und Einzugseinrichtungen (12, 14) angeordnete Zusatzfördermittel (42) angeordnet sind, die im Betrieb um eine zumindest näherungsweise vertikale Achse rotieren **dadurch gekennzeichnet, dass** die Zusatzfördermittel (42) außerhalb der Hüllkurve der den Zusatzfördermitteln (42) vorgelagerten Mäh- und Einzugseinrichtungen (12) angeordnet sind.

2. Maschine (10) nach Anspruch 1, **dadurch gekennzeichnet, dass** der Umlenkkanal (40) nach vorn durch eine Umlenkkufe (38) begrenzt wird.

3. Maschine (10) nach Anspruch 2, **dadurch gekennzeichnet, dass** die Mitnehmer (44) der Zusatzfördermittel (42) Schlitze (48) in der Umlenkkufe (38) durchdringen und/oder oberhalb der Umlenkkufe (38) angeordnet sind.

4. Maschine nach einem der Ansprüche 1 bis 3, **dadurch gekennzeichnet, dass** rückwärtig des Umlenkkanals (40) Umlenkfördermittel (32) vorgesehen sind, die im Betrieb das von den Querfördermitteln (30) einlaufende Erntegut durch den Umlenkkanal (40) fördern.

5. Maschine (10) nach Anspruch 4, **dadurch gekennzeichnet, dass** die Umlenkfördermittel (32) und die Zusatzfördermittel (42) sich überlagernde Hüllkurven aufweisen.

6. Maschine (10) nach einem der Ansprüche 4 oder 5, **dadurch gekennzeichnet, dass** die Zusatzfördermittel (44) niedriger als die Umlenkfördermittel (32) sind.

7. Maschine (10) nach einem der Ansprüche 1 bis 6, **dadurch gekennzeichnet, dass** die Zusatzfördermittel (42) frei beweglich oder antreibbar sind.

## Claims

1. Machine (10) for mowing stalk crops, with mowing and intake devices (12, 14) for cutting and conveying the crop, transverse conveying means (30) for transversely conveying the cut crop at least approximately transversely with respect to the forwards direction (V) towards the longitudinal centre plane (16) of the machine (10), and a deflecting channel (40) which curves rearwards in an arc from a direction extending transversely with respect to the forwards direction (V) towards an intake channel (34) of a harvesting machine, wherein there are additional conveying means (42) which are movable on the front side of the deflecting channel (40) in relation to the deflecting channel (40), are formed separately from the mowing and intake devices (12, 14), are arranged to the rear of the mowing and intake devices (12, 14) and rotate about an at least approximately vertical axis during operation, **characterized in that** the additional conveying means (42) are arranged outside the envelope curve of the mowing and intake devices (12) which are mounted upstream of the additional conveying means (42).

2. Machine (10) according to Claim 1, **characterized in that** the deflecting channel (40) is bounded to the front by means of a deflecting skid (38).

3. Machine (10) according to Claim 2, **characterized in that** the drivers (44) of the additional conveying means (42) pass through slots (48) in the deflecting skid (38) and/or are arranged above the deflecting skid (38).

4. Machine according to one of Claims 1 to 3, **characterized in that** deflecting conveying means (32) are provided to the rear of the deflecting channel (40) and, during operation, convey the crop, which enters from the transverse conveying means (30), through the deflecting channel (40).

5. Machine (10) according to Claim 4, **characterized in that** the deflecting conveying means (32) and the additional conveying means (42) have superposed envelope curves.

6. Machine (10) according to either of Claims 4 and 5, **characterized in that** the additional conveying means (44) are lower than the deflecting conveying means (32).

7. Machine (10) according to one of Claims 1 to 6, **characterized in that** the additional conveying means (42) are freely movable or drivable.

## Revendications

1. Machine (10) pour faucher des végétaux à tiges, comprenant des dispositifs de fauchage et d'amenée (12, 14) pour couper et transporter les végétaux, des moyens de transport transversaux (30) pour le transport transversal des végétaux coupés au moins approximativement transversalement à la direction d'avance (V) dans la direction du plan médian longitudinal (16) de la machine (10), et un canal de déviation (40) qui pivote d'une direction s'étendant transversalement à la direction d'avance (V) suivant une courbe vers l'arrière dans la direction d'un canal d'amenée (34) d'une moissonneuse, des moyens de transport supplémentaires (42) étant disposés du côté avant du canal de déviation (40), de manière mobile par rapport au canal de déviation (40), étant réalisés séparément des dispositifs de fauchage et d'amenée (12, 14) et disposés vers l'arrière des dispositifs de fauchage et d'amenée (12, 14), et tournant pendant le fonctionnement autour d'un axe au moins approximativement vertical, **caractérisée en ce que** les moyens de transport supplémentaires (42) sont disposés en dehors de la courbe d'enveloppe des dispositifs de fauchage et d'amenée (12) montés avant les moyens de transport supplémentaires (42).

2. Machine (10) selon la revendication 1, **caractérisée en ce que** le canal de déviation (40) est limité vers l'avant par une cuve de déviation (38).

3. Machine (10) selon la revendication 2, **caractérisée en ce que** les moyens d'entraînement (44) des moyens de transport supplémentaires (42) traversent des fentes (48) dans la cuve de déviation (38) et/ou sont disposés au-dessus de la cuve de déviation (38).

4. Machine selon l'une quelconque des revendications 1 à 3, **caractérisée en ce que** vers l'arrière du canal de déviation (40) sont prévus des moyens de transport de déviation (32) qui transportent à travers le canal de déviation (40) les végétaux arrivant pendant le fonctionnement depuis les moyens de transport transversaux (30).

5. Machine (10) selon la revendication 4, **caractérisée en ce que** les moyens de transport de déviation (32) et les moyens de transport supplémentaires (42) présentent des courbes d'enveloppe superposées.

6. Machine (10) selon l'une quelconque des revendications 4 ou 5, **caractérisée en ce que** les moyens de transport supplémentaires (44) sont plus bas que les moyens de transport de déviation (32).

7. Machine (10) selon l'une quelconque des revendications 1 à 6, **caractérisée en ce que** les moyens de transport supplémentaires (42) peuvent être déplacés ou entraînés librement.
